# EUROPÄISCHE PATENTSCHRIFT

(11) **EP 1 193 432 B1**
(45) Veröffentlichungstag und Bekanntmachung des Hinweises auf die Patenterteilung: **24.05.2006**
(21) Anmeldenummer: 01203474.0
(22) Anmeldetag: 14.09.2001
(51) Int. Cl.: F16K 11/20

(54) **Ventil, insbesondere Heizkörperventil**
Valve, in particular radiator valve
Soupape, en particulier soupape de radiateur

(30) Priorität: 30.09.2000 DE 10048690
(43) Veröffentlichungstag der Anmeldung: 03.04.2002
(73) Patentinhaber: Danfoss A/S, 6430 Nordborg (DK)
(72) Erfinder: Messmer, James David, 8000 Aarhus (DK)
(74) Vertreter: Knoblauch, Andreas

(56) Entgegenhaltungen:
- DE-A- 19 813 307
- DE-B- 1 139 707
- DE-C- 24 398
- FR-A- 902 355

## Beschreibung

Die Erfindung betrifft ein Ventil, insbesondere Heizkörperventil, mit einem Ventilgehäuse, das einen Einlaßanschluß und einen Auslaßanschluß aufweist, wobei zwischen dem Einlaßanschluß und dem Auslaßanschluß eine Absperreinrichtung mit einem Ventilelement und einem Ventilsitz angeordnet ist, wobei das Ventilgehäuse einen Innenraum aufweist, der über eine Einlaßmündung mit dem Einlaßanschluß und über eine Auslaßmündung mit dem Auslaßanschluß in Verbindung steht, und der Ventilsitz an einem ersten Ende eines Kanals innerhalb eines Sitzgehäuses angeordnet ist, das im Innenraum angeordnet und zwischen einer ersten Position, in der das zweite Ende des Kanals mit der Einlaßmündung in Überdeckung steht, und einer zweiten Position, in der das zweite Ende des Kanals mit der Auslaßmündung in Überdeckung steht, verdrehbar ist.

DE 11 39 707 B beschreibt einen Absperrhahn, insbesondere für Warmwasser- oder Dampfheizungsanlagen, mit den Merkmalen des Oberbegriffs des Anspruchs 1. In ein Gehäuse ist ein Küken eingesetzt, das in unterschiedliche Winkelpositionen verdreht werden kann. Das Gehäuse weist in einer Linie einen Einlaß und einen Auslaß auf. Das Küken weist mehrere Kanäle auf, nämlich einen ersten Kanal, der das Küken diametral durchsetzt. Wenn das Küken so verdreht wird, daß dieser Kanal den Einlaß mit dem Auslaß verbindet, dann ist ein Ventilelement, das mit einem Ventilsitz zusammenwirkt, ohne Bedeutung. Wenn hingegen das Küken um 90° verdreht wird, dann stehen zwei andere Kanäle mit dem Einlaß und dem Auslaß in Verbindung, die durch ein mit einem Ventilsitz zusammenwirkendes Ventilelement voneinander getrennt sind. Das Küken kann Zwischenstellungen einnehmen, um bei Ausfall eines das Ventilelement steuernden Elektromagneten eine Steuerung der durchströmenden Flüssigkeit bewirken zu können.

Ein weiteres als Heizkörperventil ausgebildetes Ventil ist aus WO 99/22282 bekannt.

Üblicherweise ist bei einem derartigen Heizkörperventil die Durchströmrichtung vorgegeben und mit einem Pfeil auf der Außenseite des Gehäuses markiert. Die Durchströmrichtung sollte beachtet werden, um Störungen zu vermeiden, die sich vor allem durch unangenehme Geräusche bemerkbar machen. Normalerweise ist die ventilsitzseitige Seite der Absperreinrichtung mit dem Einlaßanschluß und die ventilelementseitige Seite der Absperreinrichtung mit dem Auslaßanschluß verbunden. Wenn das Ventilelement auf den Ventilsitz zu bewegt wird, findet eine allmähliche Drosselung des durchströmenden Wassers statt. Bei dieser "korrekten" Betriebsweise ergeben sich normalerweise keine Probleme.

Anders sieht es aus, wenn das Ventil falsch angeschlossen wird, d.h. die Speiseleitung eines Heizungssystem mit dem Auslaßanschluß verbunden wird. In diesem Fall strömt das Wasser über das Ventilelement zum Ventilsitz und von dort in den Einlaßanschluß. Wenn das Ventil schließt, wird das Ventilelement auf den Ventilsitz zu bewegt. Wenn der Spalt zwischen dem Ventilelement und dem Ventilsitz eine gewisse Größe unterschreitet, schließt das Ventilelement schlagartig, was einen ebenso plötzlichen Druckanstieg am Auslaßanschluß zur Folge hat. Dieser Druckanstieg äußert sich in einem Wasserschlag, der nicht nur unangenehme Geräusche zur Folge hat, sondern auch Beschädigungen im Leitungssystem hervorrufen kann. Dieser Wasserschlag kann aber auch durch einen externen Impuls ausgelöst werden, beispielsweise durch ein anderes Ventil, das plötzlich schließt oder öffnet, eine Pumpe, die anläuft oder stoppt, oder anderes. Diese Ursachen, die noch nicht alle restlos geklärt sind, sind besonders kritisch dann, wenn das Ventil falsch montiert ist.

Die Gefahr einer Fehlmontage von Heizkörperventilen ist nicht nur aufgrund von mangelnden Qualifikationen des Montagepersonals gegeben, sondern auch dann, wenn man in älteren Häusern oder Anlagen nicht mehr genau feststellen kann, welche Leitung zum Zufluß und welche zum Abfluß des Heizwassers verwendet wird.

Der Erfindung liegt die Aufgabe zugrunde, ein Ventil unabhängig von der Durchströmrichtung betreiben zu können.

Diese Aufgabe wird bei einem Ventil der eingangs genannten Art dadurch gelöst, daß zwischen dem Ventilgehäuse und einer den Kanal umgebenden Wand ein Freiraum ausgebildet ist.

Das Sitzgehäuse bildet also einen Einsatz im Ventilgehäuse, der immer so positioniert werden kann, daß die Durchströmrichtung durch das Ventil "richtig" ist. Wenn das Ventil so angeschlossen ist, daß der Wasserzufluß über den Eingangsanschluß erfolgt, dann wird das Sitzgehäuse so positioniert, daß das Wasser vom Einlaßanschluß in den Kanal eintreten kann. Da der Kanal am Ventilsitz mündet, wird das Ventilelement vom ventilsitzseitigen Ende her angeströmt. Wenn das Ventilelement vom Ventilsitz abgehoben ist, dann kann das Wasser weiter durch den Freiraum strömen, der zwischen dem Ventilgehäuse und dem Sitzgehäuse ausgebildet ist. Die Auslaßmündung ist in diesem Fall offen, so daß das Wasser durch den Auslaßanschluß abströmen kann. Falls das Ventil anders herum eingebaut ist, das Wasser also durch den Auslaßanschluß zuströmt, dann wird das Sitzgehäuse einfach in die zweite Position verdreht. Das Wasser kommt dann durch den Auslaßanschluß und die Auslaßmündung in den Kanal und strömt das Ventilelement wieder von dem ventilsitzseitigen Ende an. Der Ventilsitz bleibt also ortsfest im Innenraum, während das zweite Ende des Kanals dorthin geschwenkt wird, wo das Wasser zuströmt.

Vorzugsweise ist das Sitzgehäuse um eine Achse verdrehbar, die parallel zur Bewegungsrichtung des Ventilelements verläuft. Damit kann der Ventilsitz nicht nur ortsfest im Innenraum gehalten werden, sondern er behält auch seine Ausrichtung zum Ventilelement bei. Es ist daher keine neue Justierung des Ventilelements erforderlich, wenn das Sitzgehäuse verstellt worden ist.

Vorzugsweise ist das zweite Ende des Kanals von einer Dichtung umgeben. Damit wird das einströmende Wasser zuverlässig von dem ausströmenden Wasser getrennt. Das Einbauen einer Dichtung ist mit geringerem Aufwand möglich als das hoch genaue Anpassen von Sitzgehäuse und Ventilgehäuse.

Bevorzugterweise ist der Innenraum entlang einer Bahn, auf der sich das zweite Ende des Kanals bewegt, rotationssymmetrisch ausgebildet. Das zweite Ende des Kanals bleibt also immer im gleichen Abstand, vorzugsweise sogar in Anlage an der Wand des Innenraums. Insbesondere bei der Verwendung einer Dichtung ist damit sichergestellt, daß die Dichtung immer an ihrem Platz verbleibt. Das Verstellen des Sitzgehäuses wird damit einfacher.

Bevorzugterweise weist der Innenraum zumindest in einem Bereich, in dem die Einlaß- und die Auslaßmündungen angeordnet sind, eine sphärische Begrenzungswand auf. Die Wand bildet also einen Teil einer Kugeloberfläche. Damit lassen sich auf einfache Weise gute Dichtungsmöglichkeiten erzielen.

Bevorzugterweise sind die erste und die zweite Position um 180° versetzt zueinander angeordnet. Dies entspricht dem normalen Aufbau des herkömmlichen Heizkörperventils, bei dem Einlaßanschluß und Auslaßanschluß einander gegenüberliegen. Auch wird dadurch das Einstellen der gewünschten Winkelposition des Sitzgehäuses vereinfacht, weil man bei einer Drehung um 180° unabhängig von der Drehrichtung immer den gleichen Weg zurücklegen muß.

Bevorzugterweise weist die Einlaßmündung eine Einlaßachse und die Auslaßmündung eine Auslaßachse auf, die beide den gleichen Winkel mit der Bewegungsrichtung des Ventilelements einschließen. Dies stellt sicher, daß das zweite Ende des Kanals unabhängig von der Drehstellung des Sitzgehäuses immer eine dichte Anlage an die Wand des Innenraums im Bereich der Mündungen erzielen kann.

Vorzugsweise liegt der Winkel im Bereich von 40° bis 50°. Diese Ausgestaltung ist insbesondere dann von Vorteil, wenn der Einlaßanschluß seitlich und der Auslaßanschluß unten am Ventilgehäuse angeordnet ist. In diesem Fall ergibt sich bei einem Winkel von etwa 45 ° für beide Mündungen etwa der gleiche Strömungsquerschnitt. Natürlich sind bei anderen Gehäuseformen auch andere Winkel möglich.

Bevorzugterweise weist das Sitzgehäuse einen Führungsring auf, der im Ventilgehäuse oder einem damit verbundenen Einsatz geführt ist. Der Führungsring stellt sicher, daß das Sitzgehäuse, das im Bereich des zweiten Endes des Kanals nur einseitig am Ventilgehäuse anliegt, immer die richtige Ausrichtung beibehält, so daß das Ventilelement mit der notwendigen Zuverlässigkeit mit dem Ventilsitz zusammenwirken kann.

Vorzugsweise ist eine Drehmomentangriffsfläche am Führungsring angeordnet. Da der Führungsring über seinen Umfang praktisch gleichförmig abgestützt ist, gibt ein Drehmomentangriff am Führungsring die beste Möglichkeit, das Sitzgehäuse gleichförmig zu verdrehen, also einseitige Belastungen zu vermeiden.

Bevorzugterweise wirkt die Drehmomentangriffsfläche mit einer von außen zugänglichen Verstelleinrichtung zusammen. Der Führungsring muß also nicht nach außen geführt werden. Vielmehr kann man eine Verstelleinrichtung verwenden. Eine derartige Verstelleinrichtung ist in vielen Ventilen bereits vorhanden, beispielsweise, um eine Voreinstellung der Durchflußmenge zu bewirken.

Bevorzugterweise ist der Führungsring mit dem Ventilsitz über Halterarme verbunden, wobei die Erstreckung der Halterarme in Umfangsrichtung höchstens genau so groß ist, wie die Erstreckung von Lücken zwischen den Halterarmen. Damit ist sichergestellt, daß das durch den Spalt zwischen Ventilsitz und Ventilelement hindurchtretende Wasser genügend Platz hat, um durch die jeweils nicht vom zweiten Ende des Kanals abgedeckte Mündung aus dem Innenraum herauszufließen. Das Sitzgehäuse behindert also die Strömung durch das Ventil an sich nicht.

Vorzugsweise ist ein Haltearm in Umfangsrichtung im Bereich des zweiten Endes des Kanals angeordnet. Hier treten durch das einströmende Wasser die größten Kräfte auf, so daß der eine Haltearm hier den nötigen Widerstand leisten und das zweite Ende des Kanals in Anlage an der Wand des Innenraums halten kann.

Bevorzugterweise sind zwei Haltearme um 180° versetzt zueinander angeordnet. Diese Anordnung hat zwei Vorteile. Zum einen ist auch auf der dem einströmenden Wasser gegenüberliegenden Seite immer für eine ausreichende Abstützung des Sitzgehäuses im Ventilgehäuse gesorgt. Zum anderen stellen zwei Halterarme mit entsprechend großen Lücken dazwischen nur einen relativ geringen Widerstand für das das Ventil durchströmende Wasser dar.

Die Erfindung wird im folgenden anhand eines bevorzugten Ausführungsbeispiels in Verbindung mit der Zeichnung näher beschrieben. Hierin zeigen:
- Fig. 1: einen schematischen Querschnitt durch ein Heizkörperventil,
- Fig. 2: einen vergrößerten Ausschnitt und
- Fig. 3: eine perspektivische Ansicht eines Sitzgehäuses.

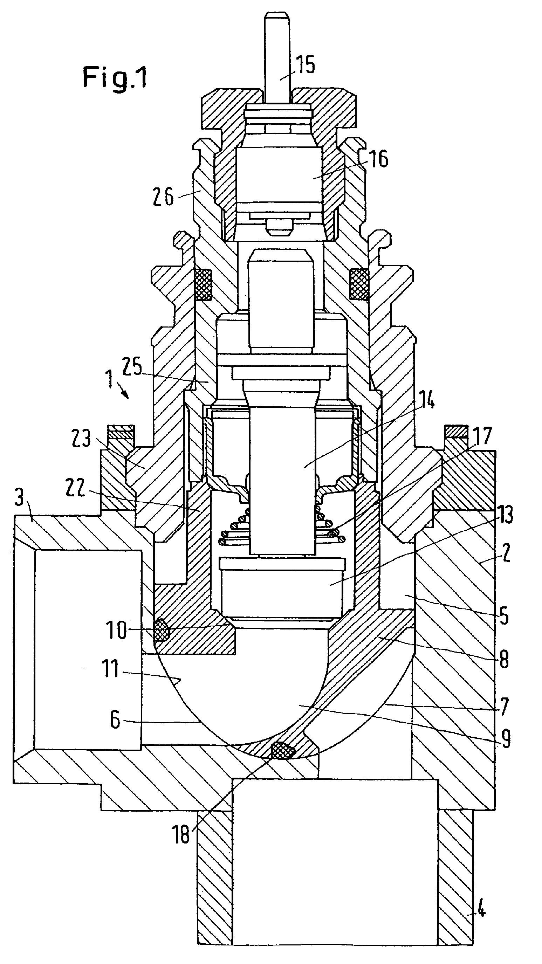

Fig. 1 zeigt ein Heizkörperventil 1 mit einem Ventilgehäuse 2, das einen Einlaßanschluß 3 und einen Auslaßanschluß 4 aufweist. Die Begriffe "Einlaßanschluß" und "Auslaßanschluß" werden hier nur gewählt, um die beiden Anschlüsse zu unterscheiden. Wie weiter unten erläutert werden wird, ist es nicht erforderlich, daß das Wasser (oder eine andere Flüssigkeit) tatsächlich durch den Einlaßanschluß 3 ein und durch den Auslaßanschluß 4 austritt.

Im Ventilgehäuse 2 ist ein Innenraum 5 angeordnet, der über eine Einlaßmündung 6 mit dem Einlaßanschluß 3 und einer Auslaßmündung 7 mit dem Auslaßanschluß 4 verbunden ist.

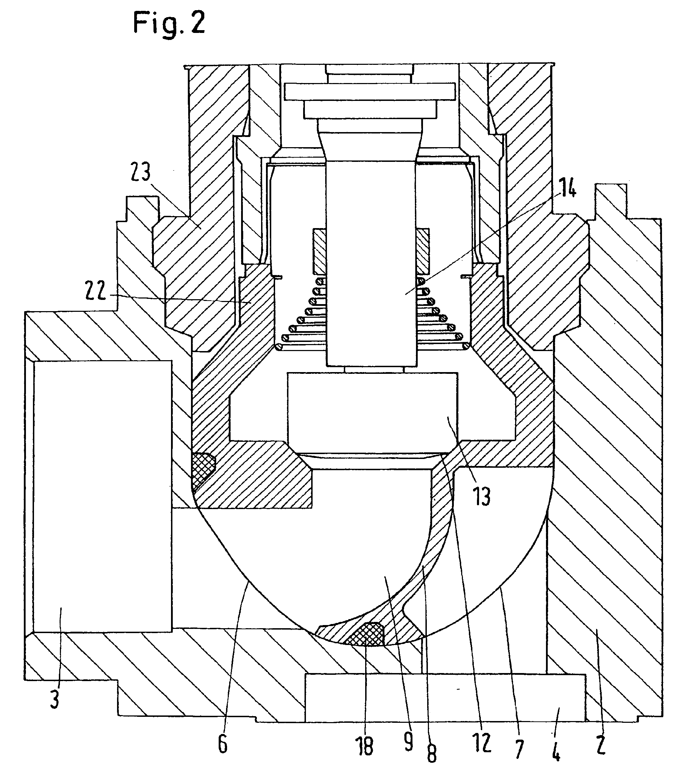

In dem Innenraum 5 ist ein Sitzgehäuse 8 angeordnet, in dem ein Kanal 9 verläuft, der ein erstes Ende 10 und ein zweites Ende 11 aufweist. Das erste Ende 10 des Kanals 9 bildet, wie dies besser aus Fig. 2 zu erkennen ist, einen Ventilsitz 12, mit dem ein Ventilelement 13 zusammenwirkt, das in an sich bekannter und daher nicht näher erläuterter Weise über eine Ventilspindel 14 betätigt wird, die ihrerseits wieder durch einen Stift 15 betätigt wird, der durch eine Stopfbuchse 16 geführt ist. Schematisch ist eine Feder 17 dargestellt, die das Ventilelement 13 vom Ventilsitz 12 wegdrückt.

Ein O-Ring 18 umgibt das zweite Ende 11 des Kanals 9. Hierzu ist am Sitzgehäuse 8 eine Nut 19 vorgesehen, die das zweite Ende 11 des Kanals 9 umgibt.

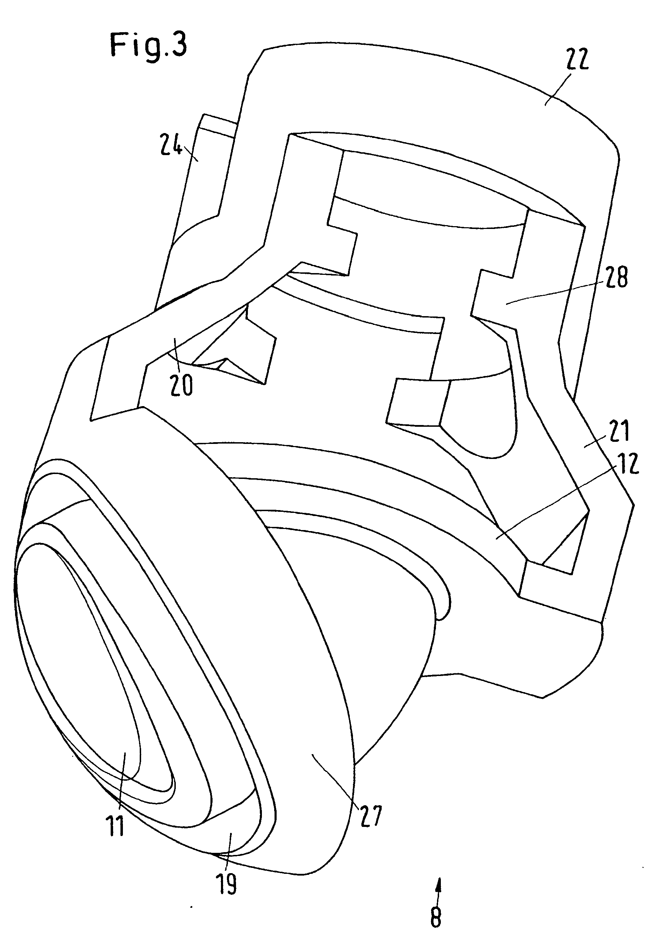

Wie insbesondere aus Fig. 3 zu erkennen ist, ist der Ventilsitz 12 über zwei Halterarme 20, 21 mit einem Führungsring 22 verbunden. Der Führungsring 22 ist, wie aus den Fig. 1 und 2 zu erkennen ist, in einem Einsatz 23 geführt, der in das Ventilgehäuse 2 eingeschraubt ist. Aus Gründen der Übersicht ist in den Fig. 1 und 2 ein kleiner Spalt zwischen dem Führungsring 22 und dem Einsatz 23 vorgesehen. Dieser Spalt ist jedoch üblicherweise kleiner als dargestellt, so daß man das Sitzgehäuse 8 gegenüber dem Einsatz 23 und damit auch gegenüber dem Ventilgehäuse verdrehen kann, ohne die Position des Sitzgehäuses 8 im Ventilgehäuse 2 an sich zu verändern.

Der eine Halterarm 20 ist (in Umfangsrichtung gesehen) am Ventilsitz 12 dort befestigt, wo auch das zweite Ende 11 des Kanals 9 austritt. Der zweite Halterarm 21 ist um 180° versetzt dazu angeordnet.

Am Führungsring 22 ist eine Drehmomentangriffsfläche 24 vorgesehen, beispielsweise in Form eines Schlitzes. Diese Drehmomentsangriffsfläche 24 kann ergänzt werden um eine entsprechende Drehmomentangriffsfläche, die um einen von 180° abweichenden Winkel versetzt im Führungsring 22 angeordnet ist. Die Drehmomentangriffsfläche 24 befindet sich auf jeden Fall im Bereich einer der beiden Halterarme 20, 21. Mit dieser Ausgestaltung wird erreicht, daß der Führungsring 22 und sein Antrieb nur in einer vorbestimmten Winkel- oder Drehstellung miteinander in Eingriff gebracht werden können.

Die Erstreckung der beiden Halterarme 20, 21 in Umfangsrichtung ist höchstens genau so groß wie, in der Regel aber wesentlich kleiner als die Erstreckung von Lücken zwischen den Halterarmen 20, 21 in Umfangsrichtung. Das Sitzgehäuse 8 ist also sehr offen, so daß es der Durchströmung von Wasser (oder einer anderen Flüssigkeit) praktisch keinen Widerstand entgegensetzt.

Zum Verstellen des Sitzgehäuses 8 im Gehäuse 2 ist ein nach außen geführtes Verstellelement 25 im Einsatz 23 angeordnet. Dieses Verstellelement 25 weist eine aus dem Einsatz 23 herausragende Grifffläche 26 auf, an der ein Monteur entweder mit Hand oder mit einem Werkzeug angreifen kann, um das Sitzgehäuse 8 im Ventilgehäuse 2 von der in Fig. 1 dargestellten Position, in der das zweite Ende 11 des Kanals 9 in Überdeckung mit der Einlaßmündung 6 steht, um 180° zu verdrehen, so daß das zweite Ende 11 in Überdeckung mit der Auslaßmündung 7 steht.

Die Form des Bodens des Innenraumes 5 entspricht einer Kugeloberfläche, d.h. diese Fläche ist sphärisch ausgebildet. Damit ist sie zunächst einmal rotationssymmetrisch, so daß das Sitzgehäuse 8, genauer gesagt die das zweite Ende 11 des Kanals 9 umgebenden Dichtfläche 27 unabhängig von der Winkelposition des Sitzgehäuses 8 gegenüber dem Ventilgehäuse 2 in Anlage an der Wand des Innenraumes 5 gehalten wird. Darüber hinaus wird durch die sphärische Ausbildung eine gute Dichtmöglichkeit zwischen dem Sitzgehäuse 8 und dem Ventilgehäuse 2 erreicht, die durch den O-Ring 18 noch verbessert wird. Da in keiner Drehstellung des Sitzgehäuses 8 gegenüber dem Ventilgehäuse 2 eine größere Lücke zwischen diesen beiden Teilen besteht, ergibt sich auch kein Risiko, daß der O-Ring 18 aus seiner Nut 19 herausfallen kann. Im Grunde können aber praktisch alle rotationssymmetrischen Formen verwendet werden.

An den Halterarmen 20, 21 können zusätzlich noch Vorsprünge 28 vorgesehen sein, die zur Führung des Ventilelements 13 geeignet sind. Damit wird sichergestellt, daß unabhängig von der Winkellage des Sitzgehäuses 8 gegenüber dem Ventilgehäuse 2 das Ventilelement 13 immer genau zum Ventilsitz 12 ausgerichtet ist.

Wie insbesondere aus den Fig. 1 und 2 zu erkennen ist, ist die Einlaßmündung 6 und die Auslaßmündung 7 um etwa 45° gegenüber der vertikalen, d.h. der Bewegungsrichtung des Ventilelements 13 geneigt. Der Einlaßanschluß 3 ist horizontal gerichtet und der Auslaßanschluß 4 vertikal. Aufgrund der Ausrichtung der Einlaßmündung 6 und der Auslaßmündung 7 haben aber beide Mündungen im wesentlichen den gleichen Querschnitt.

## Patentansprüche

1. Ventil, insbesondere Heizkörperventil, mit einem Ventilgehäuse (2), das einen Einlaßanschluß (3) und einen Auslaßanschluß (4) aufweist, wobei zwischen dem Einlaßanschluß (3) und dem Auslaßanschluß (4) eine Absperreinrichtung mit einem Ventilelement (13) und einem Ventilsitz (12) angeordnet ist, wobei das Ventilgehäuse (2) einen Innenraum (5) aufweist, der über eine Einlaßmündung (6) mit dem Einlaßanschluß (3) und über eine Auslaßmündung (7) mit dem Auslaßanschluß (4) in Verbindung steht, und der Ventilsitz (12) an einem ersten Ende (10) eines Kanals (9) innerhalb eines Sitzgehäuses (8) angeordnet ist, das im Innenraum (5) angeordnet und zwischen einer ersten Position, in der das zweite Ende (11) des Kanals (9) mit der Einlaßmündung (6) in Überdeckung steht, und einer zweiten Position, in der das zweite Ende (11) des Kanals (9) mit der Auslaßmündung (7) in Überdekkung steht, verdrehbar ist, **dadurch gekennzeichnet, daß** zwischen dem Ventilgehäuse (2) und einer den Kanal (9) umgebenden Wand ein Freiraum ausgebildet ist.

2. Ventil nach Anspruch 1, **dadurch gekennzeichnet, daß** das Sitzgehäuse (8) um eine Achse verdrehbar ist, die parallel zur Bewegungsrichtung des Ventilelements (13) verläuft.

3. Ventil nach Anspruch 1 oder 2, **dadurch gekennzeichnet, daß** das zweite Ende (11) des Kanals (9) von einer Dichtung (18) umgeben ist.

4. Ventil nach der Ansprüche 1 bis 3, **dadurch gekennzeichnet, daß** der Innenraum (5) entlang einer Bahn, auf der sich das zweite Ende (11) des Kanals (9) bewegt, rotationssymmetrisch ausgebildet ist.

5. Ventil nach Anspruch 4, **dadurch gekennzeichnet, daß** der Innenraum (5) zumindest in einem Bereich, in dem die Einlaß- und Auslaßmündungen (6, 7) angeordnet sind, eine sphärische Begrenzungswand aufweist.

6. Ventil nach einem der Ansprüche 1 bis 5, **dadurch gekennzeichnet, daß** die erste und die zweite Position um 180° versetzt zueinander angeordnet sind.

7. Ventil nach einem der Ansprüche 1 bis 6, **dadurch gekennzeichnet, daß** die Einlaßmündung (6) eine Einlaßachse und die Auslaßmündung (7) eine Auslaßachse aufweist, die beide den gleichen Winkel mit der Bewegungsrichtung des Ventilelements (13) einschließen.

8. Ventil nach Anspruch 7, **dadurch gekennzeichnet, daß** der Winkel im Bereich von 40° bis 50° liegt.

9. Ventil nach einem der Ansprüche 1 bis 8, **dadurch gekennzeichnet, daß** das Sitzgehäuse (8) einen Führungsring (22) aufweist, der im Ventilgehäuse (2) oder einem damit verbundenen Einsatz (23) geführt ist.

10. Ventil nach Anspruch 9, **dadurch gekennzeichnet, daß** eine Drehmomentangriffsfläche (24) im Führungsring (22) angeordnet ist.

11. Ventil nach Anspruch 10, **dadurch gekennzeichnet, daß** die Drehmomentangriffsfläche (24) mit einer von außen zugänglichen Verstelleinrichtung (25) zusammenwirkt.

12. Ventil nach einem der Ansprüche 9 bis 10, **dadurch gekennzeichnet, daß** der Führungsring (22) mit dem Ventilsitz (12) über Halterarme (20, 21) verbunden ist, wobei die Erstreckung der Halterarme (20, 21) in Umfangsrichtung höchstens genau so groß ist wie die Erstreckung von Lücken zwischen den Halterarmen (20, 21).

13. Ventil nach Anspruch 12, **dadurch gekennzeichnet, daß** ein Halterarm (20) in Umfangsrichtung im Bereich des zweiten Endes (11) des Kanals (9) angeordnet ist.

14. Ventil nach Anspruch 12 oder 13, **dadurch gekennzeichnet, daß** zwei Halterarme (20, 21) um 180° versetzt zueinander angeordnet sind.

## Claims

1. Valve, particularly radiator valve, with a valve housing (2), which has an inlet connection (3) and an outlet connection (4), a blocking device with a valve element (13) and a valve seat (12) being located between the inlet connection (3) and the outlet connection (4), the valve housing (2) comprising an inner chamber (5), which is connected with the inlet connection (3) via an inlet opening (6) and with the outlet connection (4) via an outlet opening (7), the valve seat (12) being located at a first end (10) of a channel (9) inside a seat housing (8), which is located in the inner chamber (5) and is rotatable between a first position, in which the second end (11) of the channel (9) overlaps the inlet opening (6), and a second position, in which the second end (11) of the channel (9) overlaps the outlet opening (7), **characterised in that** a free space is formed between the valve housing (2) and a wall surrounding the channel (9) .

2. Valve according to claim 1, **characterised in that** the seat housing (8) is rotatable around an axis, which extends in parallel to the movement direction of the valve element (13).

3. Valve according to claim 1 or 2, **characterised in that** the the second end (11) of the channel (9) is surrounded by a sealing (18).

4. Valve according to any of the claims 1 to 3, **characterised in that** the inner chamber (5) is formed to be rotation symmetrical along a path, on which the second end (11) of the channel (9) moves.

5. Valve according to claim 4, **characterised in that**, at least in an area, in which the inlet and the outlet openings (6, 7) are located, the inner chamber (5) has a spherical bordering wall.

6. Valve according to any of the claims 1 to 5, **characterised in that** the first and the second positions are offset by 180° in relation to each other.

7. Valve according to any of the claims 1 to 6, **characterised in that** the inlet opening (6) has an inlet axis and the outlet opening (7) has an outlet axis, both forming the same angle with the movement direction of the valve element (13).

8. Valve according to claim 7, **characterised in that** the angle is in the area from 40° to 50°.

9. Valve according to any of the claims 1 to 8, **characterised in that** the seat housing (8) has a guiding ring (22), which is guided in the valve housing (2) or an insert (23) connected with the valve housing (2).

10. Valve according to claim 9, **characterised in that** a rotation torque contact surface (24) is located on the guiding ring (22).

11. Valve according to claim 10, **characterised in that** the rotation torque contact surface (24) interacts with an adjustment device, which is accessible from the outside.

12. Valve according to any of the claims 9 to 10, **characterised in that** the guiding ring (22) is connected with the valve seat (12) via holder arms (20, 21), the extension of the holder arms (20, 21) in the circumferential direction being maximum as large as the extension of gaps between the holder arms (20, 21).

13. Valve according to claim 12, **characterised in that** in the circumferential direction one holder arm (20) is located in the area of the second end (11) of the channel (9).

14. Valve according to claim 12 or 13, **characterised in that** two holder arms are offset by 180° in relation to each other.

## Revendications

1. Vanne, en particulier vanne de radiateur, comprenant un boîtier de vanne (2) qui présente un raccord d'entrée (3) et un raccord de sortie (4), dans laquelle un moyen de fermeture comprenant un élément de vanne (13) et un siège de vanne (12) est agencé entre le raccord d'entrée (3) et le raccord de sortie (4), dans laquelle le boîtier de vanne (2) comporte une cavité intérieure (5) qui communique par une embouchure d'entrée (6) avec le raccord d'entrée (3) et par une embouchure de sortie (7) avec le raccord de sortie (4), et le siège de vanne (12) est agencé à une première extrémité (10) d'un canal (9) à l'intérieur d'un boîtier de siège (8), lequel est agencé dans la cavité intérieure (5) et capable de rotation entre une première position, dans laquelle la seconde extrémité (11) du canal (9) coïncide avec l'embouchure d'entrée (6), et une seconde position, dans laquelle la seconde extrémité (11) du canal (9) coïncide avec l'embouchure de sortie (7), **caractérisée en ce qu'**un espace libre est réalisé entre le boîtier de vanne (2) et une paroi qui entoure le canal (9).

2. Vanne selon la revendication 1, **caractérisée en ce que** le boîtier de siège (8) est capable de rotation autour d'un axe qui s'étend parallèlement à la direction de déplacement de l'élément de vanne (13).

3. Vanne selon la revendication 1 ou 2, **caractérisée en ce que** la seconde extrémité (11) du canal (9) est entourée par un joint (18).

4. Vanne selon les revendications 1 à 3, **caractérisée en ce que** la cavité intérieure (5) est réalisée à symétrie de révolution le long d'une voie sur laquelle se déplace la seconde extrémité (11) du canal (9).

5. Vanne selon la revendication 4, **caractérisée en ce que** la cavité intérieure (5) présente une paroi de délimitation sphérique, au moins dans une région dans laquelle sont agencés les embouchures d'entrée et de sortie (6, 7).

6. Vanne selon l'une des revendications 1 à 5, **caractérisée en ce que** la première et la seconde position sont agencées en décalage de 180° l'une par rapport à l'autre.

7. Vanne selon l'une des revendications 1 à 6, **caractérisée en ce que** l'embouchure d'entrée (6) présente un axe d'entrée et l'embouchure de sortie (7) présente un axe de sortie, lesquels définissent le même angle avec la direction de déplacement de l'élément de vanne (13).

8. Vanne selon la revendication 7, **caractérisée en ce que** l'angle est dans la plage de 40° à 50°.

9. Vanne selon l'une des revendications 1 à 8, **caractérisée en ce que** le boîtier de siège (8) comprend une bague de guidage (22), laquelle est guidée dans le boîtier de vanne (2) ou dans un insert (23) relié à celui-ci.

10. Vanne selon la revendication 9, **caractérisée en ce qu'**une surface d'application de couple de rotation (24) est ménagée dans la bague de guidage (22).

11. Vanne selon la revendication 10, **caractérisée en ce que** la surface d'application de couple de rotation (24) coopère avec un dispositif de réglage (25) accessible de l'extérieur.

12. Vanne selon l'une des revendications 9 et 10, **caractérisée en ce que** la bague de guidage (22) est reliée au siège de vanne (12) par des bras de maintien (20, 21), l'extension des bras de maintien (20, 21) en direction périphérique étant tout au plus aussi importante que l'extension de brèches entre les bras de maintien (20, 21).

13. Vanne selon la revendication 12, **caractérisée en ce qu'**un bras de maintien (20) est agencé, en direction périphérique, dans la région de la seconde extrémité (11) du canal (9).

14. Vanne selon la revendication 12 ou 13, **caractérisée en ce que** deux bras de maintien (20, 21) sont agencés en décalage de 180° l'un par rapport à l'autre.
